# EUROPEAN PATENT SPECIFICATION

(11) **EP 3 060 070 B1**
(45) Date of publication and mention of the grant of the patent: **19.09.2018**
(21) Application number: 13896135.4
(22) Date of filing: 23.10.2013
(51) Int. Cl.: A23L 3/3517, A23L 3/3544, C09K 5/06, B65D 81/24, B65D 81/28, B65D 81/38

(54) **FOOD ADDITIVE, FOOD PACKAGING ADDITIVES, AND USES THEREOF**
NAHRUNGSMITTELADDITIV, NAHRUNGSMITTELVERPACKUNGSADDITIVE UND VERWENDUNGEN DAVON
ADDITIF ALIMENTAIRE, ADDITIFS D'EMBALLAGE ALIMENTAIRE, ET UTILISATIONS DE CEUX-CI

(43) Date of publication of application: 31.08.2016
(73) Proprietor: Empire Technology Development LLC, Wilmington, DE 19808 (US)
(72) Inventor: ADAM, Georgius Abidal, Edensor Park, New South Wales 2176 (AU); NEEDHAM, Anita, Mangerton, New South Wales 2500 (AU)
(74) Representative: Grünecker Patent- und Rechtsanwälte PartG mbB
(86) International application number: PCT/US2013/066343
(87) International publication number: WO 2015/060839

(56) References cited:
- WO-A1-2012/167920
- WO-A1-2014/209369
- WO-A2-2013/069021
- US-A- 3 600 186
- US-A- 3 649 647
- US-A1- 2007 000 484
- US-A1- 2012 052 151
- DATABASE WPI Week 200570 Thomson Scientific, London, GB; AN 2005-680159 XP002768106, -& JP 2005 272471 A (KOREA ATOMIC ENERGY RES INST) 6 October 2005 (2005-10-06)
- BICER ET AL.: 'Synthesis and thermal energy storage properties of xylitol pentastearate and xylitol pentapalmitate as novel solid-liquid PCMs.' SOLAR ENERGY MATERIALS AND SOLAR CELLS vol. 102, 2012, pages 125 - 130, XP028484326
- MELONE ET AL.: 'Phase change material cellulosic composites for the cold storage of perishable products: From material preparation to computational evaluation.' APPLIED ENERGY vol. 89, 2012, pages 339 - 346, XP028301804

## Description

### BACKGROUND

Improper temperature management can be a leading cause of food spoilage and may greatly deteriorate the overall quality of food. Some foods, such as bakery items, can be damaged at low temperatures or may tend to dry-out at warm temperatures. Other foods such as raw meats, seafood and certain confectionary products such as chocolates, cakes and pastries, can deteriorate in quality and taste in warm conditions and/or if they are improperly frozen. Few packaging solutions directly assist in effectively regulating temperatures to within an ideal temperature range. Solutions that do exist can be characterized as being bulky, expensive and impractical.

WO 2014/209369 A1 relates to a food container comprising an upper wall, a lower wall and a side wall, wherein the side wall contains a phase change material providing thermal regulation based on at least one of absorption and release of the latent heat at the transition temperature. The thermal regulation is achieved by adjusting or controlling heat transfer between an outside environment and contents of the containers and packaging, so as to maintain the food at a desired temperature within a desired range of temperatures for a prolonged period of time.

US Patent Application 2007/0000484 discloses food containers which contain biodegradable polymer phase change materials.

For thermostatic food packaging, a practical solution would be one that is inexpensive, and could be implemented easily and ubiquitously without the need for bulky external packaging layers. Additionally, if the temperature sensitive foods can be made thermostable without significant detectable taste, odor or aesthetic modification resulting from environmental temperature fluctuations, there can be greater flexibility for food producers in packaging, storing or transporting these foods.

The present disclosure overcomes the disadvantages as well as provides other advantages as discussed herein.

### SUMMARY

The present invention provides a food item comprising a food additive, wherein the food additive comprises one or more phase change materials selected from a tannic acid ester, a fulvic acid ester, a hemicellulose derived ester, or any combination thereof, wherein at least one hydroxyl group of tannic acid, fulvic acid, hemicellulose, or any combination thereof, is esterified and at least one carboxyl group of the fulvic acid, hemicellulose or any combination thereof is esterified,
with the proviso that the one or more phase change materials do not comprise decyl fulvate.

The present invention further provides a food packaging material comprising a food packaging additive, wherein the food packaging additive comprises one or more phase change materials selected from a gallic acid ester, a tannic acid ester, a fulvic acid ester, a hemicellulose derived ester, or any combination thereof, wherein the phase change material is configured to store or release energy to keep the food packaging material at a desired temperature, and wherein at least one hydroxyl group of a gallic acid, tannic acid, fulvic acid ester, hemicellulose, or any combination thereof, is esterified, and at least one carboxyl group of the gallic acid, fulvic acid, hemicellulose, or any combination thereof, is esterified,
with the proviso that the one or more phase change materials do not comprise decyl fulvate or gallic acid tridecanoate.

The present invention also provides a method of preparing a food item, the method comprises mixing a food item with a food additive, wherein the food additive comprises one or more phase change materials selected from a tannic acid ester, a fulvic acid ester, a hemicellulose derived ester, or any combination thereof, wherein at least one hydroxyl group of a tannic acid, fulvic acid, hemicellulose, or any combination thereof, is esterified and at least one carboxyl group of the fulvic acid, hemicellulose or any combination thereof is esterified,
with the proviso that the one or more phase change materials do not comprise decyl fulvate.

The present invention moreover provides a method of preparing a food packaging material, the method comprising mixing a polymer with a food packaging additive to form a mixture; and processing the mixture to form the food packaging material, wherein the food packaging additive comprises one or more phase change materials selected from a gallic acid ester, a tannic acid ester, a fulvic acid ester, a hemicellulose derived ester, or any combination thereof, wherein the phase change material is configured to store or release energy to keep the food packaging material at a desired temperature, and wherein at least one hydroxyl group of a gallic acid, tannic acid, fulvic acid ester, hemicellulose, or any combination thereof, is esterified, and at least one carboxyl group of the gallic acid, fulvic acid, hemicellulose, or any combination thereof, is esterified,
with the proviso that the one or more phase change materials do not comprise decyl fulvate or gallic acid tridecanoate.

### DETAILED DESCRIPTION

This description is not limited to the particular processes, compositions, or methodologies described, as these may vary. The terminology used in the description is for the purpose of describing the particular versions or embodiments only, and it is not intended to limit the scope of the embodiments described herein. Unless defined otherwise, all technical and scientific terms used herein have the same meanings as commonly understood by one of ordinary skill in the art. In some cases, terms with commonly understood meanings are defined herein for clarity and/or for ready reference, and the inclusion of such definitions herein should not necessarily be construed to represent a substantial difference over what is generally understood in the art. However, in case of conflict, the patent specification, including definitions, will prevail.

It must also be noted that as used herein and in the appended claims, the singular forms "a", "an", and "the" include plural reference unless the context clearly dictates otherwise.

As used herein, the term "alkyl" means a saturated or unsaturated hydrocarbon group which is straight-chained or branched. An unsaturated alkyl group refers to an alkyl group that contains at least one double bond, which can also be referred to as an "alkenyl." The alkyl chain can also be substituted. An alkyl group can contain from 1 to 24, from 1 to 22, from 1 to 20, from 1 to 18, from 1 to 16, from 1 to 14, from 1 to 12, from 2 to 20, from 1 to 10, from 2 to 10, from 1 to 8, from 2 to 8, from 1 to 6, from 2 to 6, from 1 to 4, from 2 to 4, from 1 to 3, or 2 or 3 carbon atoms. Examples of alkyl groups include, but are not limited to, methyl (Me), ethyl (Et), propyl (for example, n-propyl and isopropyl), butyl (for example, n-butyl, t-butyl, isobutyl), pentyl (for example, n-pentyl, isopentyl, neopentyl), hexyl, isohexyl, heptyl, 4,4 dimethylpentyl, octyl, 2,2,4-trimethylpentyl, nonyl, decyl, undecyl, dodecyl, 2-methyl-1-propyl, 2-methyl-2-propyl, 2-methyl-1-butyl, 3-methyl-1-butyl, 2-methyl-3-butyl, 2-methyl-1-pentyl, 2,2-dimethyl-1-propyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, and the like.

As used herein, the phrase "C₁-C₂₄ alkyl, optionally comprising at least one alkenyl group" refers to a C₁-C₂₄ alkyl carbon chain that can have at least one alkenyl group located anywhere in the chain. When the C₁-C₂₄ alkyl carbon chain has at least one alkenyl group, the length of the C₁-C₂₄ alkyl carbon chain is at least two carbons. When present, the carbons in the alkenyl group are counted as carbons in the C₁-C₂₄ alkyl carbon chain.

As used herein, the term "alkenyl" means a straight or branched alkyl group having one or more double carbon-carbon bonds and 2-20 carbon atoms, including, but not limited to, ethenyl, 1-propenyl, 2-propenyl, 2-methyl-1-propenyl, 1-butenyl, 2-butenyl, and the like. In some embodiments, the alkenyl chain is from 2 to 24 carbon atoms in length, from 2 to 22 carbon atoms in length, from 2 to 20 carbon atoms in length, from 2 to 18 carbon atoms in length, from 2 to 16 carbon atoms in length, from 2 to 14 carbon atoms in length, from 2 to 12 carbon atoms in length, from 2 to 10 carbon atoms in length, from 2 to 8 carbon atoms in length, from 2 to 6 carbon atoms in length, or from 2 to 4 carbon atoms in length. In some embodiments, the alkenyl group has 1, 2, 3, 4, 5, or 6 double bonds.

As used in this document, terms "comprise," "have," and "include" and their conjugates, as used herein, mean "including but not limited to." While various compositions, methods, and devices are described in terms of "comprising" various components or steps (interpreted as meaning "including, but not limited to"), the compositions, methods, and devices can also "consist essentially of' or "consist of' the various components and steps, and such terminology should be interpreted as defining essentially closed-member groups.

Embodiments disclosed herein provide new phase change materials (PCMs) that are derived from food safe (GRAS approved) food ingredients such as gallic acid, tannic acid, hemicellulose (for example, xylitol, xyloglucan, and chitosan) and fulvic acid. In some embodiments, these materials have tailorable phase transition temperatures (above and below room temperature) with active gradient groups that have been known to have excellent energy storage characteristics. Other advantages of these materials include, but are not limited to, providing nutrition and/or health benefits. The materials described herein can be used as either food additives in food items or a food packaging additive in food packaging materials to keep the food items at the desired temperature for longer periods of time without external heating or cooling.

In some embodiments, food items that include at least one food additive are provided. In some embodiments, the food item is a baked food product, a chocolate product, a dairy product, a meat product, a poultry product, a seafood product, a vegetable product, a delicatessen product, a soup or a beverage. In some embodiments, the food additive may be present in the food item in an amount of 1 % to 15 % by weight of the food item. For example, the amount of food additive in the food item may be 1 %, 5 %, 10 %, 15 % by weight, or a percentage between any of these values.

In some embodiments, the food additive includes one or more phase change materials selected from a tannic acid ester, a hemicellulose derived ester, a fulvic acid ester, or any combination thereof. In some embodiments, at least one hydroxyl group of a tannic acid, fulvic acid, hemicellulose, or any combination thereof can be esterified, and at least one carboxyl group of the hemicellulose, fulvic acid or any combination thereof, can be esterified. In some embodiments, the fulvic acid ester or the hemicellulose derived ester can be completely esterified. In some embodiments, the tannic acid ester is esterified with a gallic acid ester to form a tannic-gallic acid ester. A non-limiting example of a tannic-gallic acid ester is described in Illustrative Example 4.

As used herein, the term "food additive" refers to any compound that can be safely added to food and be consumed by animals, such as humans or veterinary animals (for example, cats, dogs, horses, cows, pigs, chickens, fish, livestock, and the like).

As used herein, the term "completely esterified" refers to a compound where all of the side chains of molecule that can be esterified are esterified. Examples of side chains include, but are not limited to, carboxylate groups and hydroxyl groups. For example, all carboxylate groups can be esterified, all hydroxyl groups can be esterified, or all carboxylate groups and all hydroxyl groups can be esterified. Various combinations of compounds are described herein and in each of the combinations, each compound specifically recited can be completely esterified or partially esterified. Other embodiments and various combinations are also described herein and encompassed by the presently disclosed embodiments.

The hemicellulose derived ester can be any ester of any hemicellulose. In some embodiments, the hemicellulose is chitosan, xylitol, xyloglucan, or cyclodextrin. Accordingly, in some embodiments, the hemicellulose derived ester is one or more of a chitosan ester, xylitol ester, xyloglucan ester, or a cyclodextrin ester.

In some embodiments, the phase change material may include a gallic acid ester, and the xylitol ester. In some embodiments, at least one hydroxyl group of the gallic acid or the xylitol can be esterified and at least one carboxyl group of the gallic acid or the xylitol can be esterified. In some embodiments, the gallic acid ester can be completely esterified. In some embodiments, the xylitol acid ester can be completely esterified.

In some embodiments, the phase change material may include a gallic acid ester and the xyloglucan ester. In some embodiments, at least one hydroxyl group of the gallic acid or the xyloglucan can be esterified and the at least one carboxyl group of the gallic acid or the xyloglucan can be esterified. In some embodiments, the gallic acid ester can be completely esterified and the xyloglucan may not be completely esterified. In some embodiments, the xyloglucan can be completely esterified. In some embodiments, the xyloglucan can be completely esterified and the gallic ester cannot be completely esterified.

In some embodiments, the phase change material may include a gallic acid ester, and the chitosan ester. In some embodiments, at least one hydroxyl group of the gallic acid or the chitosan can be esterified and the at least one carboxyl group of the gallic acid or the chitosan can be esterified. In some embodiments, the gallic acid ester can be completely esterified and the chitosan may not be completely esterified. In some embodiments, the chitosan acid ester can be completely esterified. In some embodiments, the chitosan acid ester can be completely esterified and the gallic ester cannot be completely esterified.

In some embodiments, the phase change material may include the tannic acid ester and the xylitol ester. In some embodiments, at least one hydroxyl group of the tannic acid or the xylitol can be esterified and the at least one carboxyl group of the xylitol can be esterified. In some embodiments, the tannic acid ester can be completely esterified and the xylitol may not be completely esterified. In some embodiments, the xylitol ester can be completely esterified. In some embodiments, the xylitol ester can be completely esterified and the tannic ester may not be completely esterified.

In some embodiments, the phase change material may include the tannic acid ester and the xyloglucan ester. In some embodiments, at least one hydroxyl group of the tannic acid or the xyloglucan can be esterified and the at least one carboxyl group of the xyloglucan can be esterified. In some embodiments, the tannic acid ester can be completely esterified and the xyloglucan may not be completely esterified. In some embodiments, the xyloglucan ester can be completely esterified. In some embodiments, the xyloglucan ester can be completely esterified and the tannic ester may not be completely esterified.

In some embodiments, the phase change material may include the tannic acid ester and the chitosan ester. In some embodiments, at least one hydroxyl group of the tannic acid or the chitosan can be esterified and the at least one carboxyl group of the chitosan can be esterified. In some embodiments, the tannic acid ester can be completely esterified and the chitosan may not be completely esterified. In some embodiments, the chitosan ester can be completely esterified. In some embodiments, the chitosan ester can be completely esterified and the tannic ester may not be completely esterified.

In some embodiments, the phase change material may include the cyclodextrin ester and a hydrogel. In some embodiments, the phase change material may include a completely esterified cyclodextrin ester and a hydrogel. In some embodiments, the cyclodextrin ester may not be completely esterified.

In some embodiments, the phase change material that is present in a food item can be a hydrogel. In some embodiments, the hydrogel may be an edible gelatin, a carboxy methylcellulose, a protein hydrogel, or any combination thereof.

In some embodiments, the phase change material may include one or more of a compound of: 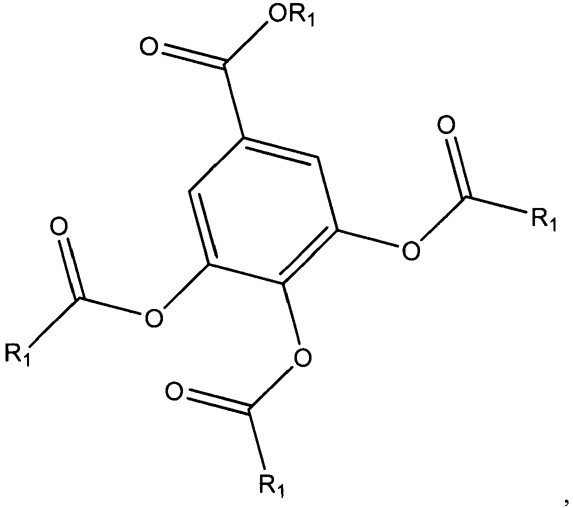 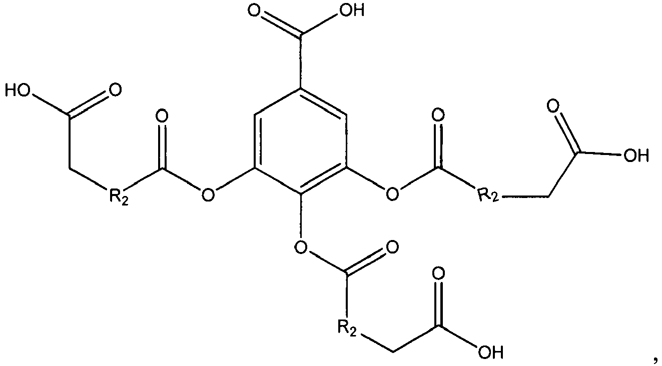 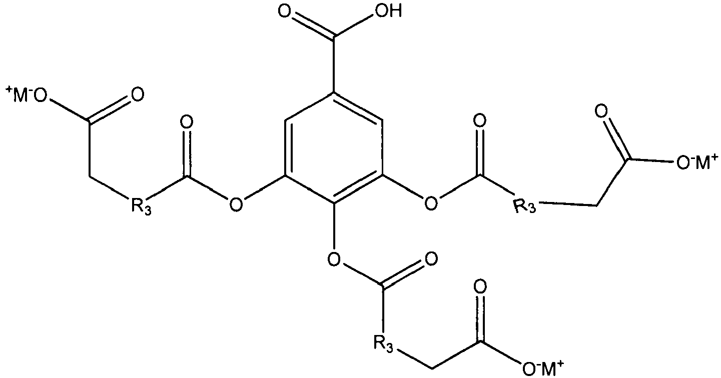 , or 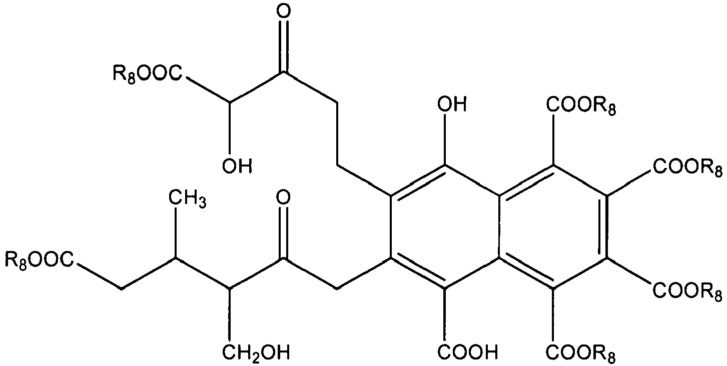 wherein:
R₁ is saturated C₁-C₂₄ alkyl or unsaturated C₁-C₂₄ alkyl;
R₂ is C₁-C₂₄ alkyl, or C₁-C₂₄ alkyl comprising at least one alkenyl group;
R₃ is C₁-C₂₄ alkyl, or C₁-C₂₄ alkyl comprising at least one alkenyl group;
R₈ is saturated C₁-C₂₄ alkyl or unsaturated C₁-C₂₄ alkyl; and
M is Na⁺, K⁺, Ca²⁺, Mg²⁺, Zn²⁺, or Fe^{+3,}.

In some embodiments, R₁, R₂, R₃, and R₈ are the same. In some embodiments, two of R₁, R₂, R₃, and R₈ are the same. In some embodiments, each of R₁, R₂, R₃, and R₈ are different. In some embodiments, R₁, R₂, R₃, and R₈ are each independently chosen from saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₁, R₂, R₃, and R₈ are each independently chosen from C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl. In some embodiments, R₈ is C₁₀H₂₁.

In some embodiments, the phase change material may include a compound of: 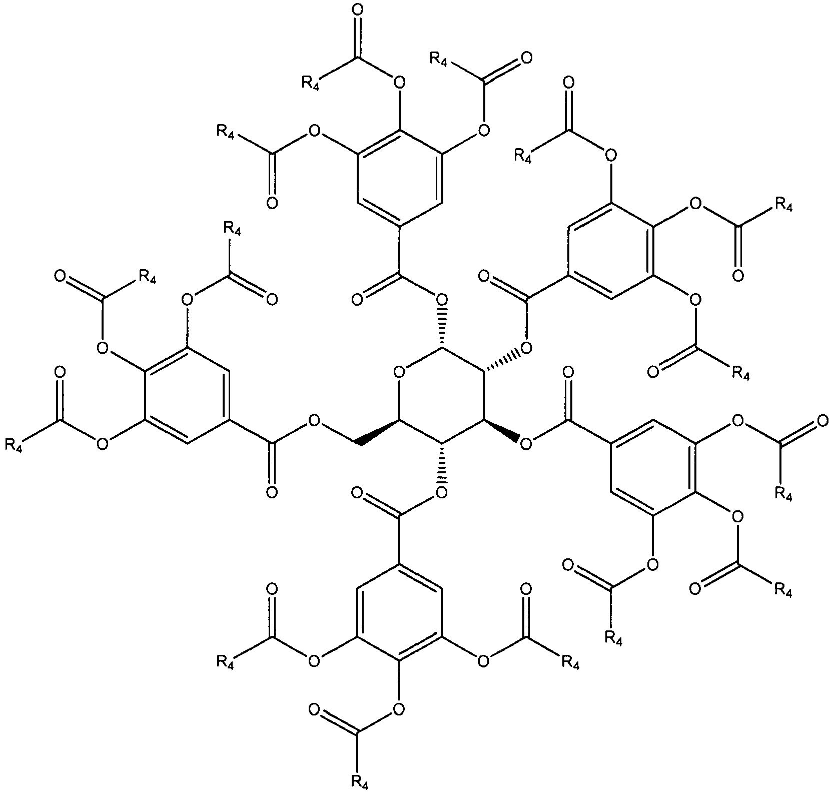 wherein:
R₄ is -(C₁-C₂₄)alkyl, -(C₁-C₂₄)C(=O)OH, -(C₁-C₂₄)O -C(=O)R₅, -(C₁-C₂₄)O-C(=O)R₆C(=O)OH, or -(C₁-C₂₄)O -C(=O)R₇C(=O)O⁻M⁺;
R₅ is C₁-C₂₄ alkyl, or C₁-C₂₄ alkyl comprising at least one alkenyl group;
R₆ is C₁-C₂₄ alkyl, or C₁-C₂₄ alkyl comprising at least one alkenyl group;
R₇ is C₁-C₂₄ alkyl, or C₁-C₂₄ alkyl comprising at least one alkenyl group;
M is Na⁺, K⁺, Ca²⁺, Mg²⁺, Zn²⁺, or Fe³⁺.

In some embodiments, R₄ is saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₄ is C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl. In some embodiments, R₄ is -(C₁-C₂₄)C(=O)OH, wherein the C₁-C₂₄ can be saturated or unsaturated as described above.

In some embodiments, R₅, R₆, and R₇ are the same. In some embodiments, two of R₄, R₅, R₆, and R₇ are the same. In some embodiments each of R₅, R₆, and R₇ are different. In some embodiments, R₅, R₆, and R₇ are each independently chosen from saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₅, R₆, and R₇ are each independently chosen from C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl.

Embodiments described herein also provide food packaging materials that include a food packaging additive, wherein the food packaging additive includes one or more phase change materials selected from a gallic acid ester, a tannic acid ester, a fulvic acid ester, a hemicellulose derived ester or any combination thereof, and wherein the phase change material is configured to store or release an energy to keep the food packaging material at a desired temperature. In some embodiments, at least one hydroxyl group of a gallic acid, tannic acid, fulvic acid, hemicellulose, or any combination thereof can be esterified and the at least one carboxyl group of the gallic acid, fulvic acid, hemicellulose, or any combination thereof can be esterified. In some embodiments, the food packaging material may be a film, a box, a bag, a pouch, a tray, a canister, a vial, or a carton. In some embodiments, the food packaging additive may be present in the food packaging material in an amount of 1 % to 30 % by weight. For example, the amount of food additive present in the food packaging material may be 1 %, 5 %, 10 %, 15 %, 20 %, 25 %, 30 % by weight, or a percentage between any of these values. In some embodiments, the food packaging material may further include at least one polymer. The polymer may be safe for contacting with food items, and can for example, be polyvinylacetate, cellulose acetate, or polyester, or a combination thereof. In some embodiments, the polymer may be present in the food packaging material in an amount of 70 % to 99% by weight of the food packaging material. For example, the amount of polymer in the food packaging material may be 70 %, 75 %, 80 %, 85 %, 90 %, 95 %, 99 %, by weight, or a percentage between any of these values.

In some embodiments, the food packaging material may include a hemicellulose derived ester, wherein the hemicellulose derived ester may be one or more of a xylitol ester, a xyloglucan ester, a chitosan ester, or a cyclodextrin ester. The esters can be completely esterified or not completely esterified.

In some embodiments, the food packaging material may include a phase change material that includes the gallic acid ester and the xylitol ester. In some embodiments, the phase change material may include the gallic acid ester and/or the xyloglucan ester. In some embodiments, the phase change material may include the gallic acid ester and the chitosan ester. In some embodiments, the phase change material may include the tannic acid ester and the xylitol ester. In some embodiments, the phase change material may include the tannic acid ester and the xyloglucan ester. In some embodiments, the phase change material may include the tannic acid ester and the chitosan ester.

In some embodiments, the food packaging materials may include a phase change material that includes one or more of a compound of: 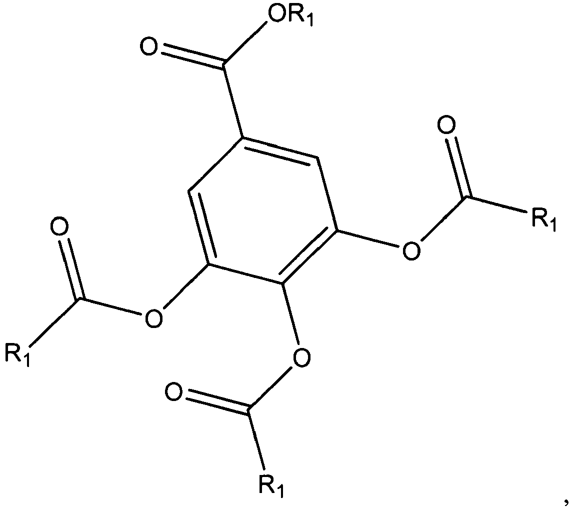 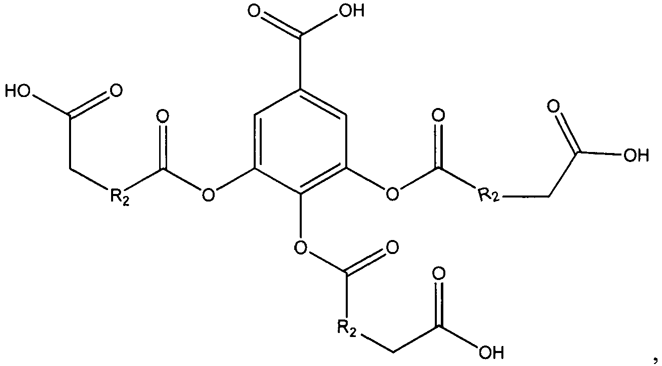 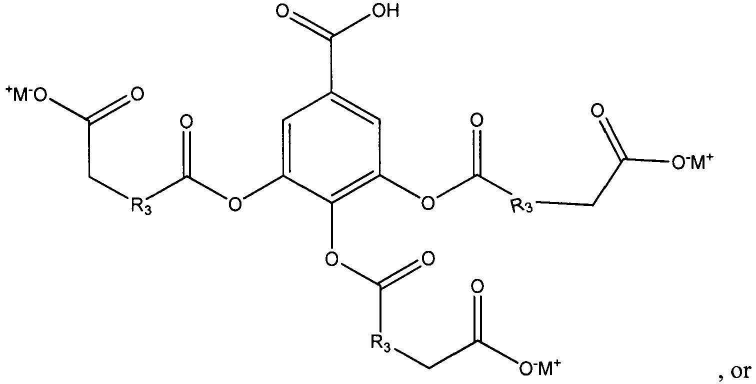 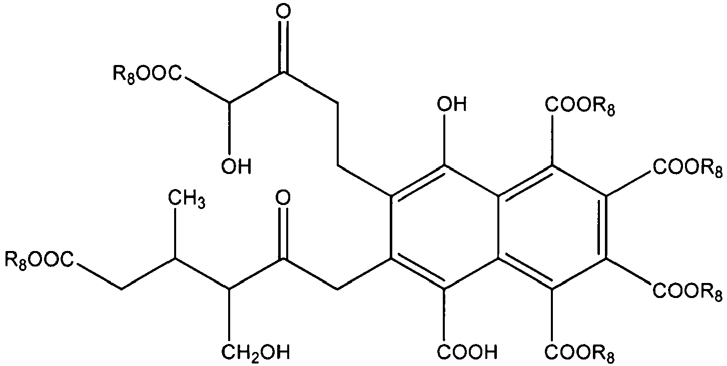 wherein:
R₁ is saturated C₁-C₂₄ alkyl or unsaturated C₁-C₂₄ alkyl;
R₂ is C₁-C₂₄ alkyl, or C₁-C₂₄ alkyl comprising at least one alkenyl group;
R₃ is C₁-C₂₄ alkyl, or C₁-C₂₄ alkyl comprising at least one alkenyl group;
R₈ is saturated C₁-C₂₄ alkyl or unsaturated C₁-C₂₄ alkyl; and
M is Na⁺, K⁺, Ca²⁺, Mg²⁺, Zn²⁺, or Fe^{+3,}.

In some embodiments, R₁, R₂, R₃, and R₈ are the same. In some embodiments, two of R₁, R₂, R₃, and R₈ are the same. In some embodiments, each of R₁, R₂, R₃, and R₈ are different. In some embodiments, R₁, R₂, R₃, and R₈ are each independently chosen from saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₁, R₂, R₃, and R₈ are each independently chosen from C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl. In some embodiments, R₈ is C₁₀H₂₁.

In some embodiments of the food packaging material, the phase change material may include a compound of: 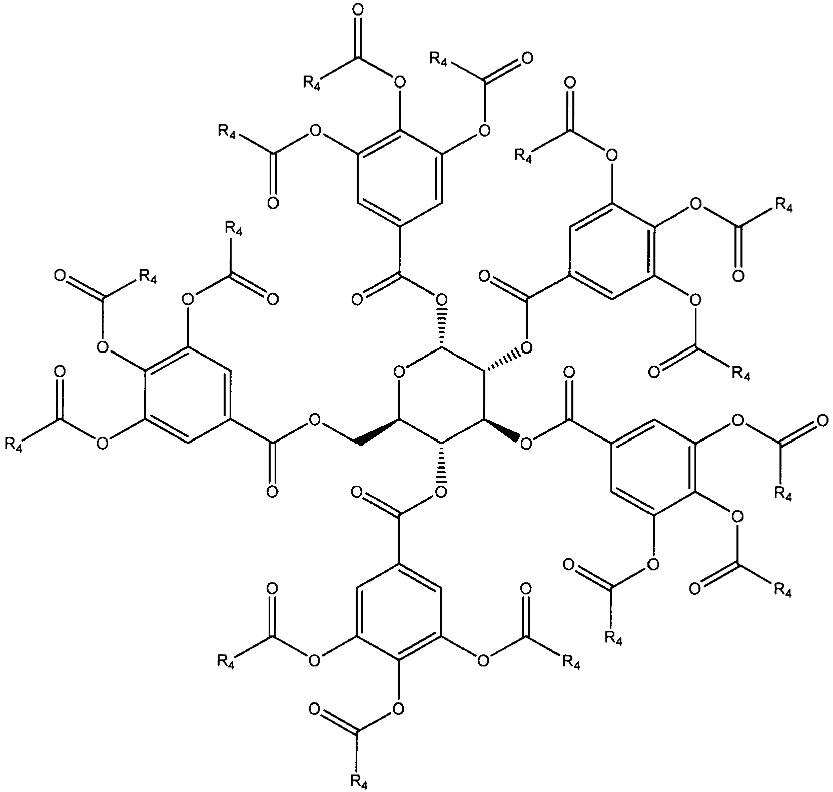 wherein:
R₄ is -(C₁-C₂₄)alkyl, -(C₁-C₂₄)C(=O)OH, -(C₁-C₂₄)O -C(=O)R₅, -(C₁-C₂₄)O-C(=O)R₆C(=O)OH, or -(C₁-C₂₄)O -C(=O)R₇C(=O)O⁻M⁺;
R₅ is C₁-C₂₄ alkyl, or C₁-C₂₄ alkyl comprising at least one alkenyl group;
R₆ is C₁-C₂₄ alkyl, or C₁-C₂₄ alkyl comprising at least one alkenyl group;
R₇ is C₁-C₂₄ alkyl, or C₁-C₂₄ alkyl comprising at least one alkenyl group; and
M is Na⁺, K⁺, Ca²⁺, Mg²⁺, Zn²⁺, or Fe⁺³.

In some embodiments, R₄ is saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₄ is C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl. In some embodiments, R₄ is -(C₁-C₂₄)C(=O)OH, wherein the C₁-C₂₄ can be saturated or unsaturated as described above.

In some embodiments, R₅, R₆, and R₇ are the same. In some embodiments, two of R₄, R₅, R₆, and R₇ are the same. In some embodiments each of R₅, R₆, and R₇ are different. In some embodiments, R₅, R₆, and R₇ are each independently chosen from saturated C₁-C₂₄ alkyl or unsaturated C₁-C₂₄ alkyl, saturated C₁-C₂₀ alkyl or unsaturated C₁-C₂₀ alkyl, saturated C₁-C₁₈ alkyl or unsaturated C₁-C₁₈ alkyl, saturated C₁-C₁₆ alkyl or unsaturated C₁-C₁₆ alkyl, saturated C₁-C₁₄ alkyl or unsaturated C₁-C₁₄ alkyl, or saturated C₁-C₁₂ alkyl or unsaturated C₁-C₁₂ alkyl. In some embodiments, R₅, and R₇ are each independently chosen from C₁-C₂₄ alkenyl, C₁-C₂₀ alkenyl, C₁-C₁₈ alkenyl, C₁-C₁₆ alkenyl, C₁-C₁₄ alkenyl, or C₁-C₁₂ alkenyl.

As described herein, the phase change material may be selected from a gallic acid ester, a tannic acid ester, a fulvic acid ester, a hemicellulose derived ester, or any combination thereof.

In some embodiments, the fulvic acid ester has a structure of

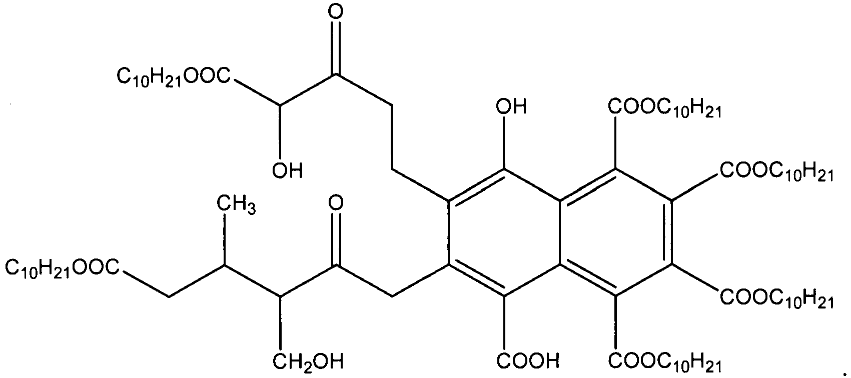

In some embodiments, the gallic acid ester has a structure of

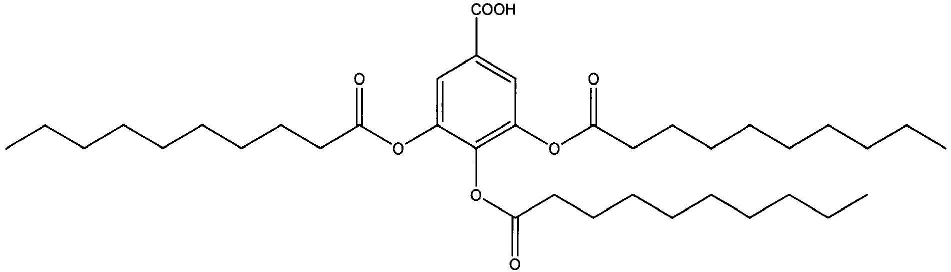

In some embodiments, the tannic acid ester has a structure of

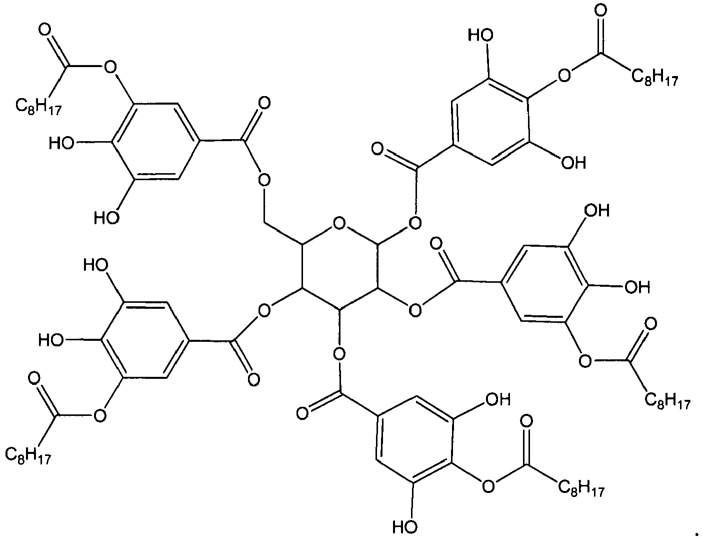

In some embodiments, the tannic acid ester has a structure of 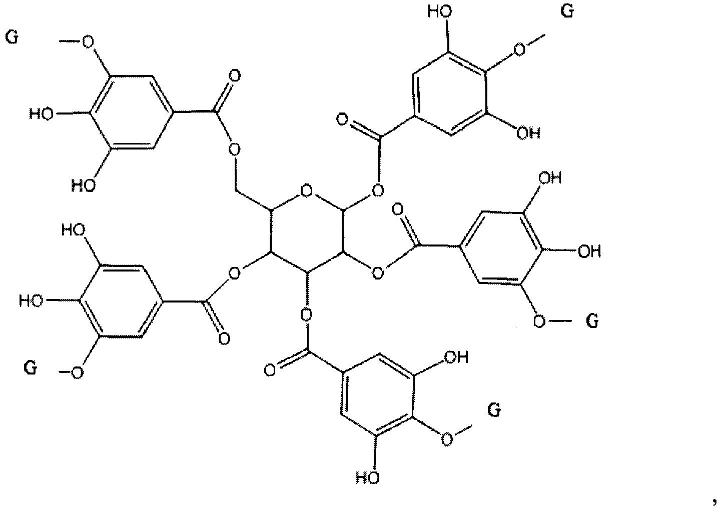 wherein G is

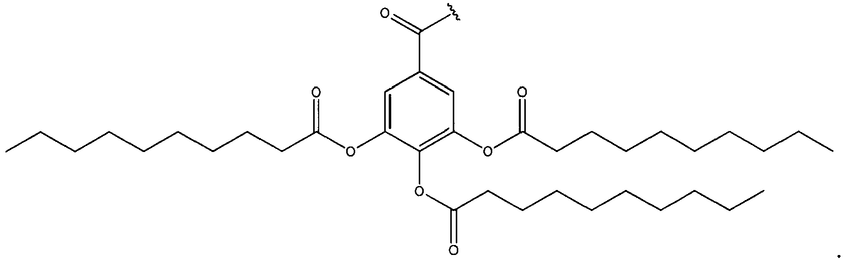

In some embodiments of the food packaging material, the packaging material may further include at least one food item. The food item can be any food item that is suitable for the food packaging material including, but are not limited to, the food items described herein. In some embodiments, the food item can be a baked food product, a chocolate product, a dairy product, a meat product, a poultry product, a seafood product, a vegetable product, a delicatessen product, a soup, or a beverage. The food item can also include a phase change material as described herein.

The phase change materials as described herein can be made according to known methods. For example, the starting materials, such as, gallic acid, tannic acid, fulvic acid or hemicellulose can be esterified according to known methods. Non-limiting examples of the methods to make the phase change materials are described in the Illustrative Example section below.

Methods of preparing food items are provided. In some embodiments, the methods include mixing a food item with a food additive, wherein the food additive includes one or more the phase change materials as described herein. In some embodiments, the mixing may include adding the food additive in an amount of 1 % to 15 % by weight of the food item or in amounts as described herein. The food item can be any one of those as described herein, and can then be pressed, baked, or made according to commonly known methods. The food additive that includes the one or more phase change materials can be used like any other ingredient used to make food and be added to a mixture of ingredients that are used to make the food.

Methods of making food packaging materials are provided. In some embodiments, the method of preparing a food packaging may include mixing a polymer as described herein with a food packaging additive to form a mixture; and processing the mixture to form the food packaging material, wherein the food packaging additive includes one or more phase change materials selected from a gallic acid ester, a tannic acid ester, a fulvic acid ester, a hemicellulose derived ester, or any combination thereof, wherein the phase change material is configured to store or release energy to keep the food packaging material at a desired temperature, and wherein at least one hydroxyl group of a gallic acid, tannic acid, fulvic acid ester, hemicellulose, or any combination thereof, is esterified, and at least one carboxyl group of the gallic acid, fulvic acid, hemicellulose, or any combination thereof, is esterified. In some embodiments, the polymer is polyvinylacetate, cellulose acetate, or polyester, or a combination thereof. The phase change material can be any phase change material suitable for a food packaging material such as, but not limited to, the phase change materials described herein. In some embodiments, processing the mixture may include injection molding, extruding, or film forming the mixture to form the food packaging material. Various food packaging materials can be prepared according to these methods, including, but not limited to, the food packaging items as described herein. In some embodiments, the food packaging material prepared according to the methods described herein can be a film, a box, a bag, a pouch, a tray, a canister, a vial, or a carton. In some embodiments, the food packaging material can be a film. In some embodiments, the mixing may include adding the food packaging additive in an amount of 1 % to 30 % by weight of the mixture or in amounts as described herein. In some embodiments, the mixing may include adding the polymer in an amount of 70% to 99 % by weight of the mixture or in amounts as described herein.

### EXAMPLES

### EXAMPLE 1: Preparation of a gallic acid caproate ester PCM.

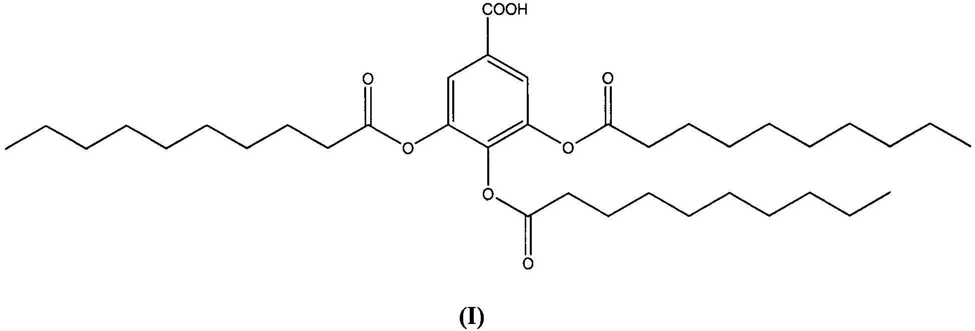

Gallic acid ester of formula (I) is prepared as follows. 114 grams (1 mol) of food grade caproic acid, gallic acid (43 grams, 0.25 mol), and anhydrous phosphoric acid (5 grams) are charged to a four-necked, 500-mL round-bottom flask fitted with a nitrogen spurge leg, thermometer, magnetic stirrer, and a rectifying column. The flask is heated to about 80 °C at which the caproic acid melts. The gallic acid is suspended in the melt under a subtle nitrogen sparge with constant agitation. Water from the reaction is liberated throughout the reaction and is continuously removed via the rectifying column. The suspended gallic acid is gradually converted to the caproate esters. The reaction is terminated after 16 hours by stopping the heat input and cooling. The unreacted gallic acid is extracted with 10% w/v sodium carbonate The viscous gallic acid ester is washed with water and dried under vacuum. The dried gallic acid ester can be used as a phase change material.

### ILLUSTRATIVE EXAMPLE 2 (outside the scope of the claims): Preparation of decyl fulvate ester PCM.

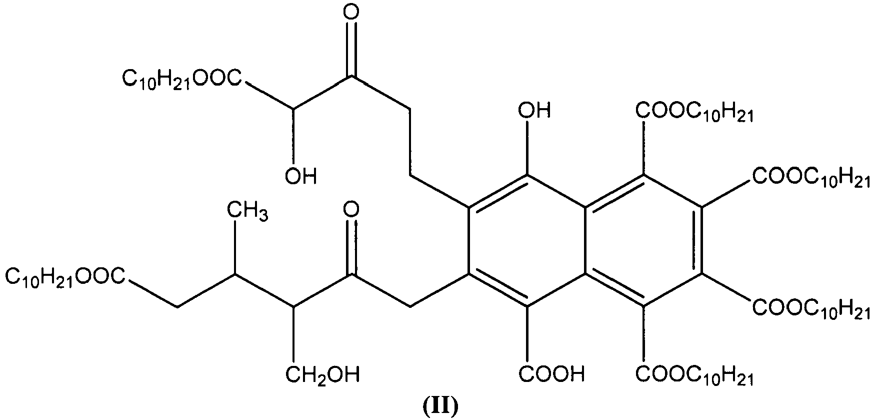

The decyl fulvate ester PCM material of formula (II) is made using a similar method as described in Example 1. The reaction vessel described in Example 1 is charged with 158 g decanol (1 mol) to which 63.8 g of solid fulvic acid and 3 g of hydrochloric acid are added. The mixture is heated to 80 °C. After completion of the reaction the solid suspension of fulvic acid is converted to a viscous product soluble in the decanol. The product is poured into 250 g of boiling water with mixing. The unreacted decanol is soluble in the boiling water. The oily layer, which contains the fulvic acid ester, is separated from the aqueous layer and dried under vacuum. The unreacted decanol can be separated from the hot water and reused as it has low solubility in cold water. The fulvic acid ester can be used as a phase change material.

### EXAMPLE 3: Preparation of penta-nonoyl ester of tannic acid.

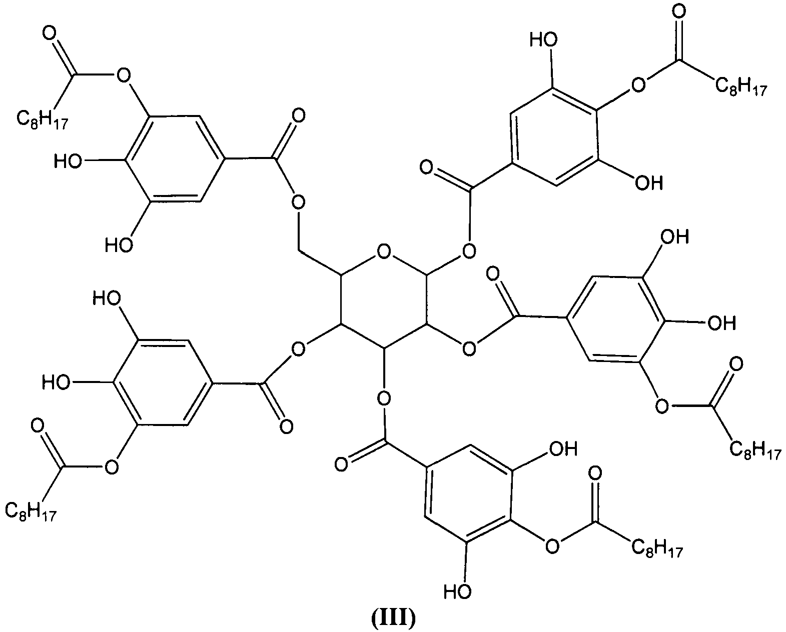

The tannic acid ester of formula (III) above is made according to the method described in Example 1. The reaction vessel as described in Example 1 is charged with nonanoic acid (267 grams, 1.5 moles), tannic acid (141 grams, 0.15 moles) and ortho-phosphorous acid (anhydrous) (5 grams) with a nitrogen sparge leg, thermometer, magnetic stirrer, and a rectifying column. The flask is heated to about 80 °C under a subtle nitrogen sparge with constant agitation. The fatty acid melts with tannic acid as a suspension. As the reaction proceeds the tannic acid is converted to its ester derivative. Water from the reaction is liberated throughout the reaction and is continuously removed via the rectifying column. The reaction is terminated after 16 hours by stopping the heat input and cooling. The unreacted nonanoic acid is extracted with 10 % w/v sodium carbonate. The viscous/semisolid tannic ester is washed with water and dried under vacuum.

### EXAMPLE 4: Preparation of tannin penta-gallate ester phase change material.

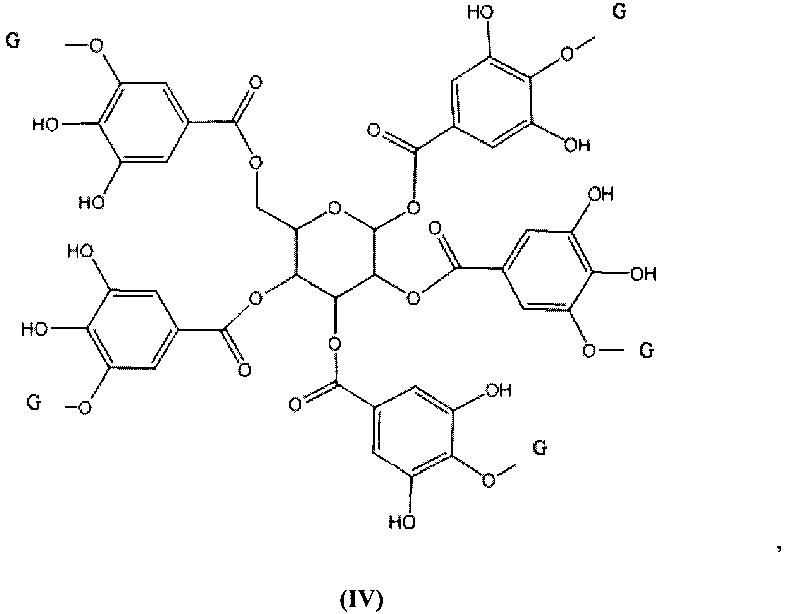

wherein G is

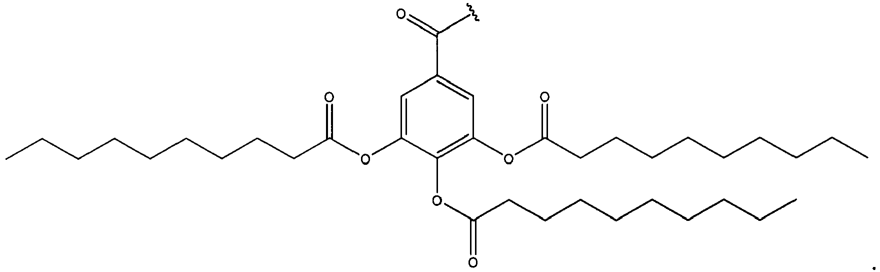

The compound of formula (IV) is prepared according to a similar method as described in Example 1. A reaction vessel similar to that described in Example 1 is charged with the gallate tri-ester prepared in Example 1 and tannic acid in molar ratio 5:1 and with anhydrous ortho-phosphorous acid (0.01 mole) to a four-necked, 500-mL round-bottom flask fitted with a nitrogen sparge leg, thermometer, magnetic stirrer, and a rectifying column. The flask is heated to about 80 °C under a subtle nitrogen sparge with constant agitation. The gallate tri-ester melts with tannic acid as a suspension. As the reaction proceeds the tannic acid is converted to its ester derivative, the structure of which is shown in formula (IV) above. Water from the reaction is liberated throughout the reaction and is continuously removed via the rectifying column. The reaction is terminated after 16 hours by stopping the heat input and cooling. The unreacted gallate tri-ester does not need to be removed because it can also be used as a phase change material. The viscous, semisolid tannic ester is washed with water and dried under vacuum.

### EXAMPLE 5: Use of gallic acid derivatives as PCM for soup product.

A commercial soup powder is mixed with the gallic acid ester PCM as prepared in Example 1 to an amount equaling 2 % of the total weight of the soup powder. Hot water is added to prepare the soup. The rate of cooling of the soup containing the gallic acid PCM is lower than a soup not containing the gallic acid ester PCM. This allows the heated soup containing PCM to remain at desirably hot temperatures for a longer period of time than with soup lacking the PCM.

### ILLUSTRTATIVE EXAMPLE 6 (outside the scope of the claims): Use of fulvic acid derivatives as PCM for snack bars.

A snack bar is prepared by mixing 1 kg chopped peanuts, 1 kg chopped cashews, 500 grams raisins, 500 grams chocolate bits, 250 grams flaked coconut, and 100 grams of the decyl fulvate ester PCM as prepared in Illustrative Example 2. The mixture is pressed into the desired rectangular bar shape. The snack bar is able to maintain its original temperature for a longer period of time than a snack bar without the decyl fulvate ester PCM. Additionally, the snack bar has enhanced nutritional value due to the antioxidant properties of the decyl fulvate PCM.

### EXAMPLE 7: Use of polyvinylacetate food packaging containing PCM for hot sandwiches.

Polyvinylacetate is mixed with a PCM, such as those described in Examples 1, 3 and 4, where the PCM is 5% of the final weight. The polyvinylacetate-PCM mixture is extruded to form films for food packaging. The films are used for wrapping hot sandwiches. The cooling rate for the sandwich wrapped in the polyvinylacetate-PCM film is lower than a sandwich wrapped in a polyvinylacetate film.

## Claims

1. Food item comprising a food additive, wherein the food additive comprises one or more phase change materials selected from a tannic acid ester, a fulvic acid ester, a hemicellulose derived ester selected from the group consisting of a xyloglucan ester, chitosan ester or cyclodextrin ester, or any combination thereof, wherein at least one hydroxyl group of tannic acid, fulvic acid, hemicellulose, or any combination thereof, is esterified and at least one carboxyl group of the fulvic acid, hemicellulose or any combination thereof is esterified,
with the proviso that the one or more phase change materials do not comprise decyl fulvate.

2. The food item of claim 1, wherein the tannic acid ester, the fulvic acid ester, or the hemicellulose derived ester is completely esterified; and/or
wherein the food item is a baked food product, a chocolate product, a dairy product, a meat product, a poultry product, a seafood product, a vegetable product, a delicatessen product, a soup, or a beverage,
preferably wherein the phase change material comprises the tannic acid ester and the xyloglucan ester; and/or
wherein the phase change material comprises the tannic acid ester and the chitosan ester; and/or
wherein the phase change material comprises the cyclodextrin ester and a hydrogel.

3. The food item of claim 1,
wherein the phase change material is a hydrogel, preferably an edible gelatin, a carboxy methylcellulose, a protein hydrogel, or any combination thereof; and/or
wherein the food additive is present in the food item in an amount of 1% to 15% by weight.

4. A food packaging material comprising a food packaging additive, wherein the food packaging additive comprises one or more phase change materials selected from a gallic acid ester, a tannic acid ester, a fulvic acid ester, a hemicellulose derived ester selected from the group consisting of a xyloglucan ester, chitosan ester or cyclodextrin ester, or any combination thereof,
wherein the phase change material is configured to store or release energy to keep the food packaging material at a desired temperature, and wherein at least one hydroxyl group of a gallic acid, tannic acid, fulvic acid, hemicellulose, or any combination thereof, is esterified, and at least one carboxyl group of the gallic acid, fulvic acid, hemicellulose, or any combination thereof, is esterified;
with the proviso that the one or more phase change materials do not comprise decyl fulvate or gallic acid tridecanoate.

5. The food packaging material of claim 4,
wherein the phase change material comprises the gallic acid ester and the xyloglucan ester; and/or
wherein the phase change material comprises the gallic acid ester and the chitosan ester; and/or
wherein the phase change material comprises the tannic acid ester and the xyloglucan ester; and/or
wherein the phase change material comprises the tannic acid ester and the chitosan ester.

6. The food packaging material of claim 4, further comprising at least one food item.

7. The food packaging material of claim 6, wherein the food item is a baked food product, a chocolate product, a dairy product, a meat product, a poultry product, a seafood product, a vegetable product, a delicatessen product, a soup, or a beverage; and/or
wherein the food item comprises a food additive, wherein the food additive comprises one or more compounds of a gallic acid ester a tannic acid ester, fulvic acid ester, or a hemicellulose derived ester selected from the group consisting of a xyloglucan ester, chitosan ester or cyclodextrin ester, or any combination thereof, wherein at least one hydroxyl group of the gallic acid, tannic acid, fulvic acid, or hemicellulose, or any combination thereof, is esterified and the carboxyl group of the gallic acid, fulvic acid, or hemicellulose, or any combination thereof, is esterified.

8. The food packaging material of claim 4, wherein the food packaging material is a film, a box, a bag, a pouch, a tray, a canister, a vial, or a carton.

9. The food packaging material of claim 4, wherein the food packaging additive is present in the food packaging material in an amount of 1 % to 30 % by weight; and/or
further comprising a polymer present in an amount of 70 % to 99 % by weight of the food packaging material.

10. A method of preparing a food item, the method comprising:
mixing a food item with a food additive, wherein the food additive comprises one or more phase change materials selected from a tannic acid ester, a fulvic acid ester, a hemicellulose derived ester selected from the group consisting of a xyloglucan ester, a chitosan ester or cyclodextrin ester, or any combination thereof, wherein at least one hydroxyl group of a tannic acid, fulvic acid, hemicellulose, or any combination thereof, is esterified and at least one carboxyl group of the fulvic acid, hemicellulose or any combination thereof is esterified;
with the proviso that the one or more phase change materials do not comprise decyl fulvate.

11. The method of claim 10, wherein the food item is a baked food product, a chocolate product, a dairy product, a meat product, a poultry product, a seafood product, a vegetable product, a delicatessen product, a soup or a beverage.

12. The method of claim 10, wherein the phase change material is a hydrogel, preferably an edible gelatin, a carboxy methylcellulose, a protein hydrogel, or any combination thereof; and/or
wherein the mixing comprises adding the food additive in an amount of 1 % to 15% by weight of the food item.

13. A method of preparing a food packaging material, the method comprising:
mixing a polymer with a food packaging additive to form a mixture; and
processing the mixture to form the food packaging material,
wherein the food packaging additive comprises one or more phase change materials selected from a gallic acid ester, a tannic acid ester, a fulvic acid ester, a hemicellulose derived ester selected from the group consisting of a xyloglucan ester, chitosan ester or cyclodextrin ester, or any combination thereof,
wherein the phase change material is configured to store or release energy to keep the food packaging material at a desired temperature, and
wherein at least one hydroxyl group of a gallic acid, tannic acid, fulvic acid ester, hemicellulose, or any combination thereof, is esterified, and at least one carboxyl group of the gallic acid, fulvic acid, hemicellulose, or any combination thereof, is esterified;
with the proviso that the one or more phase change materials do not comprise decyl fulvate or gallic acid tridecanoate.

14. The method of claim 13, wherein the polymer is polyvinylacetate, cellulose, acetate, polyester, or a combination thereof; and/or
wherein the mixing comprises adding the food packaging additive in an amount of 1 % to - 30 % by weight of the mixture; and/or
wherein the mixing comprises adding the polymer in an amount of 70 % to 99 % by - weight of the mixture.

15. The method of claim 13, wherein processing the mixture comprises injection molding, extruding, or film forming the mixture to form the food packaging material, and/or
wherein the food packaging material is a film, a box, a bag, a pouch, a tray, a canister, a vial, or a carton; and/or
wherein the food packaging material is a film.

## Patentansprüche

1. Nahrungsmittelprodukt mit einem Nahrungsmittelzusatz, wobei der Nahrungsmittelzusatz ein oder mehrere Phasenänderungsmaterialien aufweist, das bzw. die ausgewählt sind aus einem Gerbsäureester, einem Fulvinsäureester, einem aus Hemizellulose abgeleiteten Ester, der ausgewählt ist aus der Gruppe mit Xyloglucanester, Chitosanester oder Clyclodextrinester oder einer Kombination davon, wobei mindestens eine Hydroxylgruppe einer Gerbsäure, einer Fulvinsäure, einer Hemizellulose oder einer Kombination davon verestert ist und mindestens eine Carboxylgruppe der Fulvinsäure, der Hemizellulose oder einer Kombination davon verestert ist,
mit der Vorgabe, dass das eine oder die mehreren Phasenänderungsmaterialien kein Decylfulvat aufweisen.

2. Nahrungsmittelprodukt nach Anspruch 1, wobei der Gerbsäureester, der Fulvinsäureester oder der aus Hemizellulose abgeleitete Ester vollständig verestert sind; und/oder
wobei das Nahrungsmittelprodukt ein gebackenes Nahrungsmittelprodukt, ein Schokoladenprodukt, ein Milchprodukt, ein Fleischprodukt, ein Geflügelprodukt, ein Meeresprodukt, ein vegetarisches Produkt, ein Delikatessenprodukt, eine Suppe oder ein Getränk ist,
vorzugsweise, wobei das Phasenänderungsmaterial den Gerbsäureester und den Xyloglucanester aufweist; und/oder
wobei das Phasenänderungsmaterial den Gerbsäureester und den Chitosanester aufweist; und/oder
wobei das Phasenänderungsmaterial den Cyclodextrinester und ein Hydrogel aufweist.

3. Nahrungsmittelprodukt nach Anspruch 1, wobei das Phasenänderungsmaterial ein Hydrogel, vorzugsweise eine verzehrbare Gelatine, eine Carboxy-Methylzellulose, ein Proteinhydrogel oder eine Kombination davon ist; und/oder
wobei der Nahrungsmittelzusatz in dem Nahrungsmittelprodukt mit einem Anteil von 1 Gew.-% bis 15 Gew.-% vorhanden ist.

4. Nahrungsmittelverpackungsmaterial mit einem Nahrungsmittelverpackungszusatz, wobei der Nahrungsmittelverpackungszusatz ein oder mehrere Phasenänderungsmaterialien aufweist, das bzw. die ausgewählt sind aus einem Gallussäureester, einem Gerbsäureester, einem Fulvinsäureester, einem aus Hemizellulose abgeleiteten Ester, der ausgewählt ist aus der Gruppe mit Xyloglucanester, Chitosanester oder Cyclodextrinester oder einer Kombination davon,
wobei das Phasenänderungsmaterial ausgebildet ist, Energie aufzunehmen oder abzugeben, um das Nahrungsmittelverpackungsmaterial auf einer Solltemperatur zu halten, und wobei mindestens eine Hydroxylgruppe einer Gallussäure, einer Gerbsäure, einer Fulvinsäure, einer Hemizellulose oder einer Kombination davon verestert ist, und mindestens eine Carboxylgruppe der Gallussäure, der Fulvinsäure, der Hemizellulose oder einer Kombination davon verestert ist;
mit der Vorgabe, dass das eine oder die mehreren Phasenänderungsmaterialien kein Decylfulvat oder Gallussäuretridecanoat aufweisen.

5. Nahrungsmittelverpackungsmaterial nach Anspruch 4,
wobei das Phasenänderungsmaterial den Gallussäureester und den Xyloglucanester enthält; und/oder
wobei das Phasenänderungsmaterial den Gallussäureester und den Chitosanester enthält; und/oder
wobei das Phasenänderungsmaterial den Gerbsäureester und den Xyloglucanester enthält; und/oder
wobei das Phasenänderungsmaterial den Gerbsäureester und den Chitosanester enthält.

6. Nahrungsmittelverpackungsmaterial nach Anspruch 4, das mindestens ein Nahrungsmittelprodukt enthält.

7. Nahrungsmittelverpackungsmaterial nach Anspruch 6, wobei das Nahrungsmittelprodukt ein gebackenes Nahrungsmittelprodukt, ein Schokoladenprodukt, ein Milchprodukt, ein Fleischprodukt, ein Geflügelprodukt, ein Meeresprodukt, ein vegetarisches Produkt, ein Delikatessenprodukt, eine Suppe oder ein Getränk ist; und/oder
wobei das Nahrungsmittelprodukt einen Nahrungsmittelzusatz aufweist, wobei der Nahrungsmittelzusatz eine oder mehrere Verbindungen aus einem Gallussäureester, einem Gerbsäureester, einem Fulvinsäureester oder einem aus Hemizellulose abgeleiteten Ester, der ausgewählt ist aus der Gruppe mit Xyloglucanester, Chitosanester oder Cyclodextrinester oder einer Kombination davon, aufweist, wobei mindestens eine Hydroxylgruppe der Gallussäure, der Gerbsäure, der Fulvinsäure oder der Hemizellulose oder einer Kombination davon verestert ist und die Carboxylgruppe der Gallussäure, der Fulvinsäure oder der Hemizellulose oder einer Kombination davon verestert ist.

8. Nahrungsmittelverpackungsmaterial nach Anspruch 4, wobei das Nahrungsmittelverpackungsmaterial eine Folie, ein Behälter, eine Tüte, ein Beutel, eine Auflage, ein Kanister, ein Fläschchen oder ein Karton ist.

9. Nahrungsmittelverpackungsmaterial nach Anspruch 4, wobei der Nahrungsmittelzusatz in dem Nahrungsmittelverpackungsmaterial mit einem Anteil von 1 Gew.-% bis 30 Gew.-% vorhanden ist; und/oder
wobei ferner ein Polymer vorgesehen ist, das mit einem Anteil von 70 Gew.-% bis 99 Gew.-% des Nahrungsmittelverpackungsmaterials vorhanden ist.

10. Verfahren zur Aufbereitung eines Nahrungsmittelprodukts, wobei das Verfahren umfasst:
Mischen eines Nahrungsmittelprodukts mit einem Nahrungsmittelzusatz, wobei der Nahrungsmittelzusatz ein oder mehrere Phasenänderungsmaterialien aufweist, das bzw. die ausgewählt sind aus einem Gerbsäureester, einem Fulvinsäureester, einem aus Hemizellulose abgeleiteten Ester, der ausgewählt ist aus der Gruppe mit einem Xyloglucanester, einem Chitosanester oder einem Cyclodextrinester oder einer Kombination davon, wobei mindestens eine Hydroxylgruppe einer Gerbsäure, einer Fulvinsäure, einer Hemizellulose oder einer Kombination davon verestert ist und mindestens eine Carboxylgruppe der Fulvinsäure, der Hemizellulose oder einer Kombination davon verestert ist;
mit der Vorgabe, dass das eine oder die mehreren Phasenänderungsmaterialien kein Decylfulvat aufweisen.

11. Verfahren nach Anspruch 10, wobei das Nahrungsmittelprodukt ein gebackenes Nahrungsmittelprodukt, ein Schokoladenprodukt, ein Milchprodukt, ein Fleischprodukt, ein Geflügelprodukt, ein Meeresprodukt, ein vegetarisches Produkt, ein Delikatessenprodukt, eine Suppe oder ein Getränk ist.

12. Verfahren nach Anspruch 10, wobei das Phasenänderungsmaterial ein Hydrogel ist, vorzugsweise eine verzehrbare Gelatine, eine Carboxyl-Methylzellulose, ein Proteinhydrogel oder eine Kombination davon; und/oder
wobei das Mischen das Hinzufügen des Nahrungsmittelzusatzes mit einem Anteil von 1 Gew.-% bis 15 Gew.-% des Nahrungsmittelprodukts umfasst.

13. Verfahren zur Herstellung eines Nahrungsmittelverpackungsmaterials, wobei das Verfahren umfasst:
Mischen eines Polymers mit einem Nahrungsmittelverpackungszusatz derart, dass eine Mischung entsteht; und
Verarbeiten der Mischung derart, dass das Nahrungsmittelverpackungsmaterial gebildet wird,
wobei der Nahrungsmittelverpackungszusatz ein oder mehrere Phasenänderungsmaterialien aufweist, das bzw. die ausgewählt sind aus einem Gallussäureester, einem Gerbsäureester, einem Fulvinsäureester, einem aus Hemizellulose abgeleiteten Ester, der ausgewählt ist aus der Gruppe mit Xyloglucanester, Chitosanester oder Cyclodextrinester oder einer Kombination davon,
wobei das Phasenänderungsmaterial ausgebildet ist, Energie aufzunehmen oder abzugeben, sodass das Nahrungsmittelverpackungsmaterial auf einer Solltemperatur gehalten wird, und
wobei mindestens eine Hydroxylgruppe einer Gallussäure, einer Gerbsäure, eines Fulvinsäureesters, einer Hemizellulose oder einer Kombination davon verestert ist und mindestens eine Carboxylgruppe der Gallussäure, Fulvinsäure, Hemizellulose oder einer Kombination davon verestert ist;
mit der Vorgabe, dass das eine oder die mehreren Phasenänderungsmaterialien kein Decylfulvat oder Gallussäuretridecanoat enthalten.

14. Verfahren nach Anspruch 13, wobei das Polymer Polyvinylazetat, Zelluloseazetat, Polyester oder eine Kombination davon ist; und/oder
wobei das Mischen ein Hinzufügen des Nahrungsmittelverpackungszusatzes mit einem Anteil von 1 Gew.-% bis 30 Gew.-% der Mischung umfasst; und/oder
wobei das Mischen ein Hinzufügen des Polymers mit einem Anteil von 70 Gew.-% bis 99 Gew.-% der Mischung umfasst.

15. Verfahren nach Anspruch 13, wobei Verarbeiten der Mischung umfasst: Spritzgießen, Extrudieren oder Folienerzeugung aus der Mischung, um das Nahrungsmittelverpackungsmaterial herzustellen, und/oder
wobei das Nahrungsmittelverpackungsmaterial eine Folie, ein Behälter, eine Tüte, ein Beutel, eine Auflage, ein Kanister, ein Fläschchen oder ein Karton ist; und/oder wobei das Nahrungsmittelverpackungsmaterial eine Folie ist.

## Revendications

1. Article alimentaire comprenant un additif alimentaire, dans lequel l'additif alimentaire comprend un ou plusieurs matériaux à changement de phase choisis parmi un ester d'acide tannique, un ester d'acide fulvique, un ester dérivé d'hémicellulose choisi dans le groupe consistant en un ester de xyloglucane, un ester de chitosane ou un ester de cyclodextrine, ou toute combinaison de ceux-ci, dans lequel au moins un groupe hydroxyle de l'acide tannique, de l'acide fulvique, de l'hémicellulose ou toute combinaison de ceux-ci est estérifié et au moins un groupe carboxyle de l'acide fulvique, de l'hémicellulose ou de toute combinaison de ceux-ci est estérifié,
à condition que le ou les matériaux à changement de phase ne comprennent pas de décyle fulvate.

2. Article alimentaire selon la revendication 1, dans lequel l'ester d'acide tannique, l'ester d'acide fulvique ou l'ester dérivé de l'hémicellulose est complètement estérifié; et/ou
dans lequel l'article alimentaire est un produit alimentaire cuit au four, un produit au chocolat, un produit laitier, un produit carné, un produit de volaille, un produit de la mer, un produit végétal, un produit de traiteur, une soupe ou une boisson,
de préférence, dans lequel le matériau à changement de phase comprend l'ester d'acide tannique et l'ester de xyloglucane; et/ou
dans lequel le matériau à changement de phase comprend l'ester d'acide tannique et l'ester de chitosane; et/ou
dans lequel le matériau à changement de phase comprend l'ester de cyclodextrine et un hydrogel.

3. Article alimentaire selon la revendication 1,
dans lequel le matériau à changement de phase est un hydrogel, de préférence une gélatine alimentaire, une carboxyméthylcellulose, un hydrogel de protéine, ou toute combinaison de ceux-ci; et/ou
dans lequel l'additif alimentaire est présent dans l'article alimentaire en une quantité de 1% à 15% en poids.

4. Matériau d'emballage alimentaire comprenant un additif d'emballage alimentaire, dans lequel l'additif d'emballage alimentaire comprend un ou plusieurs matériaux à changement de phase choisis parmi un ester d'acide gallique, un ester d'acide tannique, un ester d'acide fulvique, un ester dérivé d'hémicellulose choisi parmi le groupe constitué d'un ester de xyloglucane, d'un ester de chitosane ou d'un ester de cyclodextrine, ou toute combinaison de ceux-ci,
dans lequel le matériau à changement de phase est configuré pour stocker ou libérer de l'énergie pour maintenir le matériau d'emballage alimentaire à une température souhaitée et dans lequel au moins un groupe hydroxyle d'un acide gallique, d'un acide tannique, d'un acide fulvique, d'hémicellulose ou toute combinaison de ceux-ci est estérifié et au moins un groupe carboxyle de l'acide gallique, de l'acide fulvique, de l'hémicellulose ou toute combinaison de ceux-ci est estérifié;
à condition que le ou les matériaux à changement de phase ne comprennent pas de décyle fulvate ni de tridécanoate d'acide gallique.

5. Matériau d'emballage alimentaire selon la revendication 4,
dans lequel le matériau à changement de phase comprend l'ester d'acide tannique et l'ester de xyloglucane; et/ou
dans lequel le matériau à changement de phase comprend l'ester d'acide gallique et l'ester de chitosane; et/ou
de préférence, dans lequel le matériau à changement de phase comprend l'ester d'acide tannique et l'ester de xyloglucane; et/ou dans lequel le matériau à changement de phase comprend l'ester d'acide tannique et l'ester de chitosane.

6. Matériau d'emballage alimentaire selon la revendication 4, comprenant en outre au moins un article alimentaire.

7. Matériau d'emballage alimentaire selon la revendication 6, dans lequel l'article alimentaire est un produit alimentaire cuit au four, un produit au chocolat, un produit laitier, un produit carné, un produit de volaille, un produit de la mer, un produit végétal, un produit de traiteur, une soupe ou une boisson; et/ou
dans lequel l'article alimentaire comprend un additif alimentaire, dans lequel l'additif alimentaire comprend un ou plusieurs composés d'un ester d'acide gallique, d'un ester d'acide tannique, d'un ester d'acide fulvique ou d'un ester dérivé d'hémicellulose choisi parmi le groupe constitué d'un ester de xyloglucane, d'un ester de chitosane ou d'un ester de cyclodextrine, ou toute combinaison de ceux-ci, dans lequel au moins un groupe hydroxyle d'un acide gallique, d'un acide tannique, d'un acide fulvique ou d'hémicellulose ou toute combinaison de ceux-ci est estérifié et au moins un groupe carboxyle de l'acide gallique, de l'acide fulvique ou de l'hémicellulose ou toute combinaison de ceux-ci est estérifié.

8. Matériau d'emballage alimentaire selon la revendication 4, dans lequel le matériau d'emballage alimentaire est un film, une boîte, un sac, une poche, un plateau, une cartouche, une fiole ou un carton.

9. Matériau d'emballage alimentaire selon la revendication 4, dans lequel l'additif d'emballage alimentaire est présent dans le matériau d'emballage alimentaire en une quantité de 1% à 30% en poids; et/ou
comprenant en outre un polymère présent en une quantité de 70% à 99% en poids du matériau d'emballage alimentaire.

10. Procédé de préparation d'un article alimentaire, le procédé comprenant les étapes suivantes:
mélanger un article alimentaire avec un additif alimentaire, dans lequel l'additif alimentaire comprend un ou plusieurs matériaux à changement de phase choisis parmi un ester d'acide tannique, un ester d'acide fulvique, un ester dérivé d'hémicellulose choisi dans le groupe consistant en un ester de xyloglucane, un ester de chitosane ou un ester de cyclodextrine, ou toute combinaison de ceux-ci, dans lequel au moins un groupe hydroxyle de l'acide tannique, de l'acide fulvique, de l'hémicellulose ou toute combinaison de ceux-ci est estérifié et au moins un groupe carboxyle de l'acide fulvique, de l'hémicellulose ou de toute combinaison de ceux-ci est estérifié;
à condition que le ou les matériaux à changement de phase ne comprennent pas de décyle fulvate.

11. Procédé selon la revendication 10, dans lequel l'article alimentaire est un produit alimentaire cuit au four, un produit au chocolat, un produit laitier, un produit carné, un produit de volaille, un produit de la mer, un produit végétal, un produit de traiteur, une soupe ou une boisson.

12. Procédé selon la revendication 10, dans lequel le matériau à changement de phase est un hydrogel, de préférence une gélatine alimentaire, une carboxyméthylcellulose, un hydrogel de protéine, ou toute combinaison de ceux-ci; et/ou
dans lequel le mélange consiste à ajouter l'additif alimentaire dans une quantité de 1% à 15% en poids de l'article alimentaire.

13. Procédé de préparation d'un matériau d'emballage alimentaire, le procédé comprenant les étapes suivantes:
mélanger un polymère avec un additif d'emballage alimentaire pour constituer un mélange; et et traiter le mélange pour constituer le matériau d'emballage alimentaire,
dans lequel l'additif d'emballage alimentaire comprend un ou plusieurs matériaux à changement de phase choisis parmi un ester d'acide gallique, un ester d'acide tannique, un ester d'acide fulvique, un ester dérivé d'hémicellulose choisi parmi le groupe constitué d'un ester de xyloglucane, d'un ester de chitosane ou d'un ester de cyclodextrine, ou toute combinaison de ceux-ci,
dans lequel le matériau à changement de phase est configuré pour stocker ou libérer de l'énergie pour maintenir le matériau d'emballage alimentaire à une température souhaitée, et
dans lequel au moins un groupe hydroxyle d'un acide gallique, d'un acide tannique, d'un acide fulvique ou d'hémicellulose ou toute combinaison de ceux-ci est estérifié et au moins un groupe carboxyle de l'acide gallique, de l'acide fulvique ou de l'hémicellulose ou toute combinaison de ceux-ci est estérifié;
à condition que le ou les matériaux à changement de phase ne comprennent pas de décyle fulvate ni de tridécanoate d'acide gallique.

14. Procédé selon la revendication 13, dans lequel le polymère est le polyvinylacétate, la cellulose, l'acétate, le polyester ou une combinaison de ceux-ci; et/ou
dans lequel le mélange consiste à ajouter l'additif d'emballage alimentaire dans une quantité de 1% à 30% en poids du mélange; et/ou
dans lequel le mélange consiste à ajouter le polymère dans une quantité de 70% à 99% en poids du mélange.

15. Procédé selon la revendication 13, dans lequel le traitement du mélange comprend le moulage par injection, l'extrusion ou le traitement filmogène du mélange pour constituer le matériau d'emballage alimentaire, et/ou
dans lequel le matériau d'emballage alimentaire est un film, une boîte, un sac, une poche, un plateau, une cartouche, une fiole ou un carton; et/ou
dans lequel le matériau d'emballage alimentaire est un film.
